# EUROPÄISCHE PATENTSCHRIFT

(11) **EP 0 575 702 B1**
(45) Veröffentlichungstag und Bekanntmachung des Hinweises auf die Patenterteilung: **28.06.1995**
(21) Anmeldenummer: 93104405.1
(22) Anmeldetag: 18.03.1993
(51) Int. Cl.: A63G 7/00, B65G 43/06

(54) **Rücklaufsperre für eine Schienenbahn**
Anti-reverse mechanism for a rail track
Mécanisme anti-retour pour une voie ferrée

(30) Priorität: 26.06.1992 DE 4220940
(43) Veröffentlichungstag der Anmeldung: 29.12.1993
(73) Patentinhaber: HEINRICH MACK GmbH & Co., Karussell- und Fahrzeugbau, Parkeinrichtungen, D-79183 Waldkirch (DE)
(72) Erfinder: Drayer, Hans, W-7819 Denzlingen (DE)
(74) Vertreter: Patentanwälte Westphal, Buchner, Mussgnug Neunert, Göhring

(56) Entgegenhaltungen:
- DE-C- 47 526
- DE-C- 861 979
- US-A- 4 724 771

## Beschreibung

Die Erfindung bezieht sich auf eine Rücklaufsperre für eine Schienenbahn der im Oberbegriff des Anspruchs 1 genannten Art.

In Vergnügungsparks und auf Messen gibt es eine vielzahl von Schienenbahnen, z.B. Achterbahnen, Bobbahnen, Wildwasserbahnen und so weiter. Allen diesen Bahnen ist gemeinsam, daß sie sich nicht aus eigenem Antrieb fortbewegen und daß sie auf einem geschlossenen Kurs fahren. Am Anfang des Rundkurses werden die Schienenfahrzeuge über eine Schräge auf eine gewisse Höhe geschleppt. Von dieser Höhe bewegen sie sich ohne eigenen Antrieb bis zum Ende des Rundkurses. Das Hochschleppen an der Schräge erfolgt z.B. mit einer Ziehkette. Da die Schräge meist sehr steil verläuft, muß ein Zurückrollen des Schienenfahrzeuges beim Ausfall des Zugmechanismus sofort verhindert werden. In der Regel handelt es sich dabei um eine Sperrklinke, die am Fahrzeug angebracht ist und die über eine am Boden der Schräge angebrachte Zahnstange gezogen wird. Die Sperrklinke wird von der einen Flanke der Verzahnung angehoben und fällt nach der abfallenden Flanke aufgrund der Schwerkraft in die Zahnlücke. Mit diesem Zurückfallen ist ein lautes, weithin hörbares Klappern verbunden.

Da vor allem bei Messen solche Arten von Schaugeschäften in der Nähe von Wohngebieten aufgestellt werden, ist diese Lärmentwicklung äußerst störend. Vor allem zu Zeiten der Nachtruhe muß diese zusätzliche Lärmentwicklung von den Anwohnern hingenommen werden.

Auch für die Insassen der jeweiligen Schienenbahnen ist diese Lärmentwicklung äußerst störend.

Der Erfindung liegt die Aufgabe zugrunde, eine Rücklaufsperre für Schienenbahnen der eingangs genannten Art zu schaffen, die nur eine geringe Geräuschentwicklung zur Folge hat, sicher in der Funktionsweise ist, unabhängig von Fremdenergie arbeitet, billig in der Herstellung ist, einen geringen Wartungsaufwand benötigt und universell einsetzbar ist.

Diese Aufgabe wird erfindungsgemäß durch die im Anspruch 1 angegebenen kennzeichnenden Merkmale gelöst. Vorteilhafte Ausführungsbeispiele sind in den Unteransprüchen angegeben.

Das wesentliche Merkmal der Erfindung ist eine Sperrklinke, die in reibschlüssiger Verbindung mit einem am Schienenfahrzeug angebrachten Reibrad steht. Durch diese reibschlüssige Kopplung zwischen Sperrklinke und Reibrad wird die Drehrichtung des Reibrades auf die Sperrklinke übertragen. Der Schwenkbereich der Sperrklinke wird durch einen am Fahrzeug angebrachten Anschlag begrenzt. Bei der Bewegung in die normale Fahrtrichtung wird die Sperrklinke durch die reibschlüssige Kopplung mit dem Reibrad bis zu diesem Anschlag angehoben. Befindet sich die Sperrklinke in Kontakt mit diesem Anschlag, so besteht ein ausreichender Abstand zwischen Sperrklinke und Verzahnung. Die Geräuschentwicklung durch das Anschlagen der Sperrklinke an den Zähnen der Verzahnung ist somit vermieden. Beim Einsatzfall, d.h., wenn das Fahrzeug anfängt, sich rückwärts zu bewegen, kehrt sich auch die Drehrichtung des Reibrades um. Diese Änderung der Drehrichtung wird durch die reibschlüssige Kopplung auf die Sperrklinke übertragen. Die Sperrklinke wird dadurch so weit gedreht, bis sie in Kontakt mit der Verzahnung kommt und in diese einrastet. Die eingerastete Sperrklinke verhindert dann ein weiteres Zurückrollen des Fahrzeuges.

Nachfolgend wird ein Ausführungsbeispiel der Erfindung anhand der Zeichnung näher erläutert. Es zeigen:
- Fig. 1: Seitenansicht der am Fahrzeug angebrachten Rücklaufsperre mit einer Zahnstange und
- Fig. 2: Schnitt entlang der Linie A-A in Fig. 1.

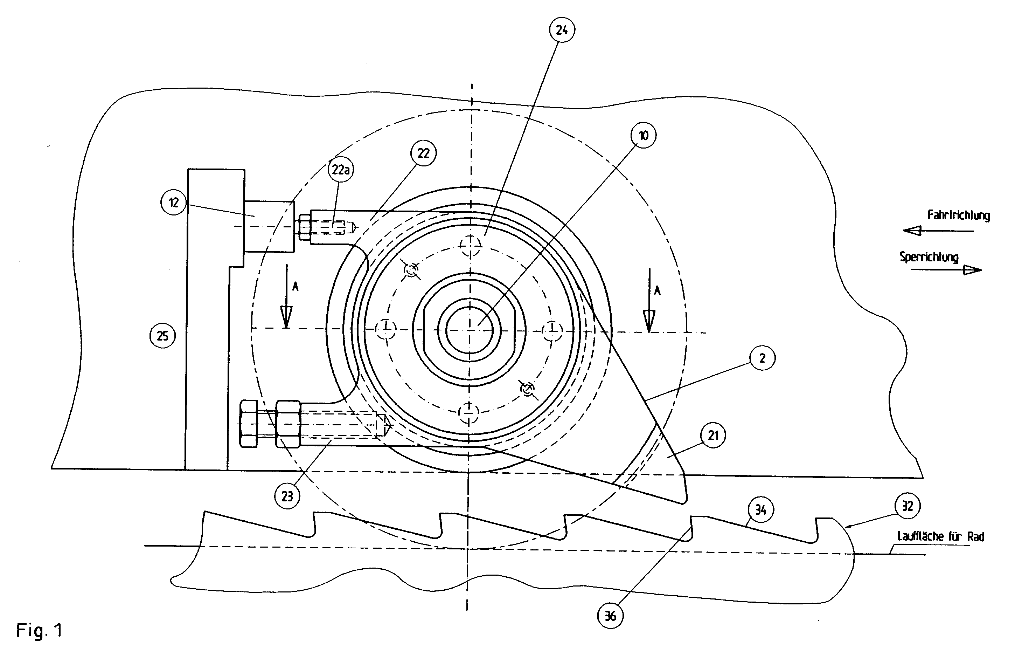

Wie aus Fig. 1 ersichtlich ist, besteht die Rücklaufsperre aus drei Teilen, nämlich einer Sperrklinke 2, einer Zahnstange 32 und einer am Fahrzeug angebrachten Halterung 25. Die Sperrklinke 2 ist auf der Laufradachse 10 drehbar gelagert. Sie besteht im wesentlichen aus einem scheibenförmigen Grundkörper 24, an dem ein Sperrzahn 21 und zwei in etwa parallel verlaufende Anschlagarme 22 und 23 ausgeformt sind. Der Sperrzahn 21 hat eine etwa dreieckförmige Gestalt. Die Spitze des Sperrzahns 21 ist entsprechend der Verzahnung der Zahnstange 32 geformt. Die Anstiegsflanke 34 der Zahnstange 32 steigt in Fahrtrichtung langsam an. Die Abfallflanke 36 fällt entgegen der Fahrtrichtung steil ab.

Am Fahrzeug ist die Halterung 25 angebracht. Ein Gummipuffer 12 ist mit einer Schraube 22a bzw. mit dem Anschlagarm 22 einstellbar verbunden.

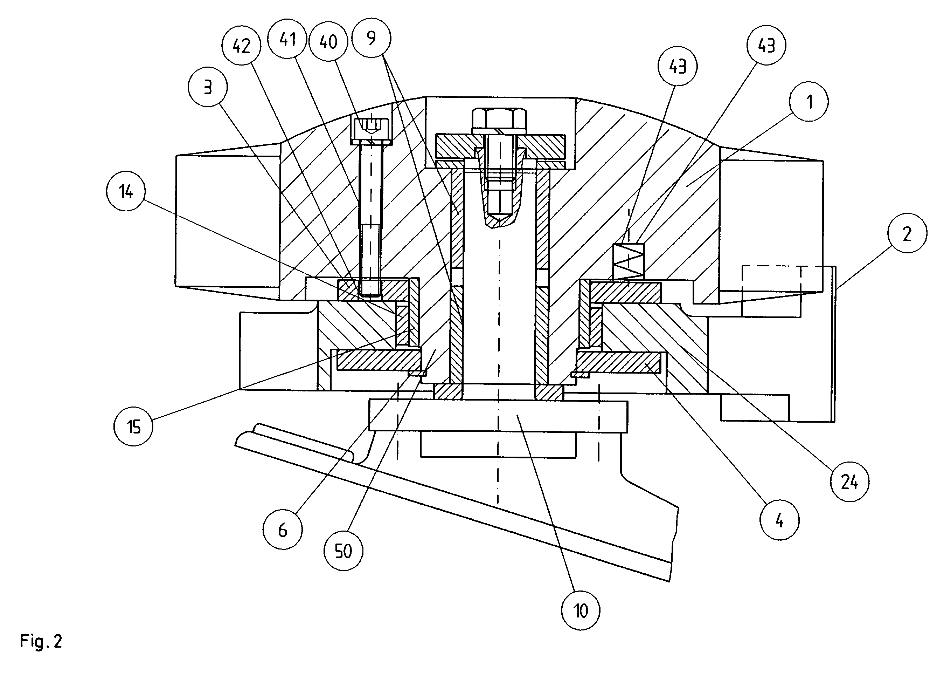

Auf der Laufradachse 10 ist die Felge 1 eines in Fig. 2 nicht dargestellten Laufrades drehbar gelagert. Die Felge 1 weist eine hohlwellenartige Verlängerung 50 auf der Seite des nicht dargestellten Fahrzeuges auf. Auf dieser Verlängerung 50 sitzt ein Ring 15 und auf diesem eine innere Reibscheibe 3 und ein Gleitring 14. Die Reibscheibe 3 enthält mehrere Bohrungen 42, in die jeweils das Ende einer von der Felge mitgeführten Schraube 40 ragt. Weiter hat die Felge 1 auf der Seite des nicht dargestellten Fahrzeuges zwei Bohrungen 43, in die jeweils Druckfedern 5 eingesetzt sind. Auf dem Gleitring 14 sitzt axial verschiebbar die Sperrklinke 2. Am Ende der hohlwellenartigen Verlängerung 50 sitzt eine äußere Reibscheibe 4, die durch einen Sicherungsring 6 gehalten wird. Der Lagerung der Felge dient eine Buchse 9.

Im folgenden wird das Funktionsprinzip der Rücklaufsperre genauer erläutert.

Die innere Reibscheibe 3 wird durch die an der Felge 1 angebrachten Gewindeschrauben 40 mitgenommen. Mit Hilfe der Druckfeder 5 wird die innere Reibscheibe 3 von der Felge 1 axial zum Fahrzeug gedrückt. Dadurch liegt die Reibscheibe 3 auf der Seitenfläche der Sperrklinke 2 an. Die gegenüberliegende Seitenfläche der Sperrklinke 2 liegt an der äußeren Reibscheibe 4 an. Die Sperrklinke 2 und die innere Reibscheibe 3 sind in geringem Maße axial verschiebbar. Die Sperrklinke 2 ist auf der Laufradachse 10 frei drehbar gelagert. Der Sperrzahn 21 ist so dimensioniert, daß der Schwerpunkt der Sperrklinke 2 auf der Seite des Sperrzahns 21 liegt.

Aufgrund der Schwerkraft wirkt auf den Sperrzahn 21 immer eine Kraft in Richtung der Zahnstange 32. Bei Bewegung des Fahrzeugs in die normale Fahrtrichtung wird aufgrund der reibschlüssigen Verbindung zwischen den beiden Reibscheiben 3 und 4 und der Sperrklinke 2 der Sperrzahn 21 entgegen der Schwerkraft angehoben. Die Anhebung erfolgt so weit, bis der Anschlagarm 22 mit dem Gummipuffer 12 an der Halterung 25 anliegt. Der Sperrzahn 21 wird dadurch gerade so weit angehoben, daß er nicht mehr mit der Verzahnung der Zahnstange 32 in Berührung kommt. Somit ergibt sich keine störende Geräuschentwicklung. Bei einem Einsatzfall, d.h. bei einer Bewegung des Fahrzeuges entgegen der Fahrtrichtung, wird der Sperrzahn 21 einerseits aufgrund der Schwerkraft und zusätzlich noch durch die reibschlüssige Kupplung mit den Reibscheiben in Richtung der Zahnstange 32 bewegt. Der Sperrzahn 21 greift dann sofort in eine der Verzahnungen der Zahnstange 32 ein und verhindert ein weiteres Zurückrollen des Fahrzeuges.

Ein wesentlicher Vorteil der Vorrichtung ist, daß beim Nachlassen der reibschlüssigen Kupplung oder bei einem totalen Ausfall der reibschlüssigen Kupplung der Sperrzahn 21 automatisch aufgrund der Schwerkraft auf der Zahnstange 32 aufliegt und die normale Sicherheitswirkung nicht beeinträchtigt wird. Die damit verbundene Geräuschentwicklung zeigt zusätzlich dem Mechaniker an, daß die Reibkraft nicht mehr ausreichend ist. In diesem Fall müssen die Reibscheiben 3 und 4 ausgewechselt oder die Federkraft der Federn 5 geändert werden.

## Patentansprüche

1. Rücklaufsperre für eine Schienenbahn, bestehend aus einer mit dem Schienenkörper fest verbundenen Zahnstange und einer Sperrklinke mit Sperrzahn, dadurch gekennzeichnet, daß die Sperrklinke (2) in reibschlüssiger Verbindung mit mindestens einer der Drehrichtung der Laufräder folgenden Reibscheibe (3) steht und ein Anschlag (12) vorgesehen ist, der die Drehbewegung der Sperrklinke (2) beschränkt.

2. Vorrichtung nach Anspruch 1, dadurch gekennzeichnet, daß der Schwerpunkt der Sperrklinke (2) auf der Seite des Sperrzahns (21) liegt.

3. Vorrichtung nach Anspruch 1 oder 2, dadurch gekennzeichnet, daß der Anschlag als Gummipuffer (12) ausgebildet ist, der an der Sperrklinke 2 befestigt ist.

4. Vorrichtung nach einem der vorhergehenden Ansprüche, dadurch gekennzeichnet, daß eine äußere Reibscheibe (4) vorhanden ist, die zusammen mit der inneren Reibscheibe (3) in reibschlüssiger Verbindung mit der Sperrklinke (2) steht.

5. Vorrichtung nach einem der vorhergehenden Ansprüche, dadurch gekennzeichnet, daß mindestens eine Feder (5) zwischen einer Felge (1) und der inneren Reibscheibe (3) angeordnet ist, die eine radiale Kraft auf die Reibscheibe (3) ausübt.

6. Vorrichtung nach Anspruch 5, dadurch gekennzeichnet, daß die innere Reibscheibe (3) mindestens eine Bohrung (42) aufweist, in die eine mit der Felge (1) mitgeführte Gewindeschraube (40) eingreift.

7. Vorrichtung nach Anspruch 5 oder 6, dadurch gekennzeichnet, daß die Felge (1), die Sperrklinke (2) und die Reibscheibe (3 bzw. 4) eine gemeinsame Drehachse aufweisen.

## Claims

1. An anti-reverse mechanism for a rail track, consisting of a toothed rack securely connected to the tracked body and a pawl with ratchet,
characterised in that the pawl (2) is in frictional communication with at least one friction disc (3) following the direction of rotation of the track wheels and a stop (12) is provided, which limits the rotational movement of the pawl (2).

2. A mechanism according to Claim 1,
characterised in that the centre of gravity of the pawl (2) lies on the side of the ratchet (21).

3. A mechanism according to Claim 1 or 2,
characterised in that the stop is constructed as a rubber buffer (12), which is attached to the pawl 2.

4. A mechanism according to one of the preceding Claims,
characterised in that an outer friction disc (4) is provided, which together with the inner friction disc (3) is in frictional communication with the pawl (2).

5. A mechanism according to one of the preceding Claims,
characterised in that at least one spring (5) is disposed between a rim (1) and the inner friction disc (3), which exerts a radial force on the friction disc (3).

6. A mechanism according to Claim 5,
characterised in that the inner friction disc (3) comprises at least one bore (42), in which a threaded screw (40) entrained with the rim (1) engages.

7. A mechanism according to Claim 5 or 6,
characterised in that the rim (1), the pawl (2) and the friction disc (3 and 4 respectively) have a common axis of rotation.

## Revendications

1. Mécanisme antiretour pour une voie ferrée, constitué d'une crémaillère solidaire de la voie ferrée et d'un cliquet de verrouillage avec une dent de verrouillage, caractérisé en ce que le cliquet de verrouillage (2) est en liaison par frottement (3) accompagnant l'une des roues dans le sens de rotation et qu'on prévoit une butée (12), qui limite le déplacement en rotation du cliquet de verrouillage (2).

2. Dispositif selon la revendication 1, caractérisé en ce que le centre de gravité du cliquet de verrouillage (2) est sur le côté de la dent de verrouillage (21).

3. Dispositif selon la revendication 1 ou 2, caractérisé en ce que la butée est en forme de tampon en caoutchouc (12), qui est fixé au cliquet de verrouillage (2).

4. Dispositif selon l'une des revendications précédentes, caractérisé en ce qu'un disque de frottement externe (4) est présent qui, avec le disque de frottement interne (3) est en liaison de frottement avec le cliquet de verrouillage (2).

5. Dispositif selon l'une des revendications précédentes, caractérisé en ce qu'on implante au moins un ressort (5) entre une jante (1) et le disque de frottement interne (3) qui exerce une force radiale sur le disque de frottement (3).

6. Dispositif selon la revendication 5, caractérisé en ce que le disque de frottement interne (3) présente au moins un trou (42) dans lequel vient en prise une vis (40) filetée introduite par la jante (1).

7. Dispositif selon la revendication 5 ou 6, caractérisé en ce que la jante (1), le cliquet de verrouillage (2) et le disque de frottement (3 ou 4) présentent un axe de rotation commun.
